# EUROPEAN PATENT APPLICATION

(11) **EP 4 757 166 A1**
(43) Date of publication of application: **10.06.2026**
(21) Application number: 25221573.6
(22) Date of filing: 08.12.2025
(51) Int. Cl.: H02P 3/04

(54) **POWER DISTRIBUTION FOR DC BRUSHED MOTORS WITH INTEGRATED BRAKES**

(30) Priority: 09.12.2024 US 202418974493
(71) Applicant: PRATT & WHITNEY CANADA CORP., Longueuil, Québec J4G 1A1 (CA)
(72) Inventor: MANSOUR, Tarek, Saint-Laurent (CA)
(74) Representative: Dehns

(57) **Abstract**

An apparatus may include a first terminal, a second terminal, a direct current (DC) motor (202a, 302a, 402a, 502a, 602a), a brake mechanism (204a, 304a, 404a, 504a, 604a), and a voltage blocking mechanism. The DC motor (202a, 302a, 402a, 502a, 602a) may be configured to operate when a voltage is applied across the first terminal and the second terminal. The brake mechanism (204a, 304a, 404a, 504a, 604a) may be configured to apply braking to the DC motor (202a, 302a, 402a, 502a, 602a) when no voltage is present across the first terminal and the second terminal, and remove the braking from the DC motor (202a, 302a, 402a, 502a, 602a) when the voltage is applied across the first terminal and the second terminal. The voltage blocking mechanism may be configured to prevent the DC motor (202a, 302a, 402a, 502a, 602a) from operating when the voltage is applied across the first terminal and the second terminal until the braking from the brake mechanism is removed from the DC motor (202a, 302a, 402a, 502a, 602a).

## Description

### TECHNICAL FIELD

This disclosure generally relates to DC motors. More specifically, this disclosure relates to improved power distribution for DC brushed motors with integrated brakes.

### BACKGROUND

In many applications, a direct current (DC) motor includes or is used in conjunction with a brake mechanism, which holds a load in a fixed position when no power is applied. In existing DC motor braking schemes, the motor may receive power before the brake is released. This may lead to motor damage, excessive wear, increased heat, etc. that may reduce the life of the DC motor.

### SUMMARY

This disclosure relates to improved power distribution for DC brushed motors with integrated brakes.

In some examples, an apparatus may include a first terminal, a second terminal, a direct current (DC) motor, a brake mechanism, and a voltage blocking mechanism. The DC motor may be configured to operate when a voltage is applied across the first terminal and the second terminal. The brake mechanism may be configured to apply braking to the DC motor when no voltage is present across the first terminal and the second terminal, and remove the braking from the DC motor when the voltage is applied across the first terminal and the second terminal. The voltage blocking mechanism may be configured to prevent the DC motor from operating when the voltage is applied across the first terminal and the second terminal until the braking from the brake mechanism is removed from the DC motor.

In other examples, a method may include, while no voltage is applied across a first terminal and a second terminal of an apparatus including a direct current (DC) motor, disengaging operation of the DC motor, and applying braking from a brake mechanism for the DC motor. The method may further include, while a voltage is applied across the first terminal and the second terminal of the apparatus, removing braking from the brake mechanism for the DC motor, while the braking is being removed, disengaging operation of the DC motor, and after the braking has been removed, engaging operation of the DC motor.

In in still other examples, an electric actuator includes a first terminal, a second terminal, a direct current (DC) motor, a brake mechanism, and a voltage blocking mechanism. The DC motor may be configured to operate when a voltage is applied across the first terminal and the second terminal. The brake mechanism may be configured to apply braking to the DC motor when no voltage is present across the first terminal and the second terminal, and remove the braking from the DC motor when the voltage is applied across the first terminal and the second terminal. The voltage blocking mechanism may be configured to prevent the DC motor from operating when the voltage is applied across the first terminal and the second terminal until the braking from the brake mechanism is removed from the DC motor.

Any single one or any combination of the following features may be used with the examples above. The voltage blocking mechanism may be a Zener diode including an anode and a cathode. The DC motor may include a third terminal and a fourth terminal. The brake mechanism may include a fifth terminal and a sixth terminal. The first terminal, the fifth terminal, and the cathode may be electrically coupled. The third terminal and the anode may be electrically coupled. The second terminal, the fourth terminal, and the sixth terminal may be electrically coupled. The apparatus and/or the electric actuator may include a capacitor. The capacitor may include a seventh terminal and an eighth terminal. The seventh terminal may be electrically coupled to the first terminal, and the eighth terminal may be electrically coupled to the second terminal. The voltage blocking mechanism may be a time delay device configured to prevent the DC motor from operating when the voltage is applied across the first terminal and the second terminal for a first time greater than a second time for the brake mechanism to remove the braking from the DC motor when the voltage is applied across the first terminal and the second terminal, and after the first time is elapsed, allow the DC motor to operate. The brake mechanism may include a solenoid with a third terminal and a fourth terminal. The first terminal and the third terminal may be electrically coupled. The second terminal and the fourth terminal may be electrically coupled. The solenoid may be configured to apply the braking to the DC motor when no voltage is present across the first terminal and the second terminal, and remove the braking from the DC motor when the voltage is applied across the first terminal and the second terminal. The voltage blocking mechanism may be a switching device. The switching device may be configured to disengage the DC motor from a power source when the solenoid is applying the braking to the DC motor, and engage the DC motor with the power source when the solenoid has removed the braking from the DC motor. The switching device may be configured to disengage the DC motor from a power source when the brake mechanism is applying braking to the DC motor, and engage the DC motor with the power source when the brake mechanism has removed braking from the DC motor. Disengaging operation of the DC motor while the braking is being removed may include blocking a voltage from a third terminal of the DC motor via a Zener diode. Disengaging operation of the DC motor while the braking is being removed may include delaying engaging operation of the DC motor for a first time greater than a second time for the brake mechanism to remove the braking from the DC motor when the voltage is applied across the first terminal and the second terminal. Engaging operation of the DC motor may include engaging operation of the DC motor after the first time has elapsed. When applying the braking to the DC motor the solenoid may open a switching device coupled to a power terminal of the DC motor to disengage operation of the DC motor. When the braking to the DC motor is removed, the solenoid may close the switching device to engage operation of the DC motor. Disengaging operation of the DC motor while the braking is being removed may include maintaining an open state of a switching device coupled to a power terminal of the DC motor. Engaging operation of the DC motor may include closing the switching device.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1 illustrates a schematic view of an example system including a DC motor and a brake mechanism in accordance with this disclosure;
FIGURE 2 illustrates a schematic view of another example system including a DC motor and a brake mechanism in accordance with this disclosure;
FIGURE 3 illustrates a schematic view of another example system including a DC motor and a brake mechanism in accordance with this disclosure;
FIGURE 4 illustrates a schematic view of another example system including a DC motor and a brake mechanism in accordance with this disclosure;
FIGURE 5 illustrates a schematic view of another example system including a DC motor and a brake mechanism in accordance with this disclosure;
FIGURE 6 illustrates a schematic view of another example system including a DC motor and a brake mechanism in accordance with this disclosure;
FIGURE 7 illustrates an example method for improved power distribution for DC brushed motors with integrated brakes in accordance with this disclosure; and
FIGURE 8 illustrates another example method for improved power distribution for DC brushed motors with integrated brakes in accordance with this disclosure.

### DETAILED DESCRIPTION

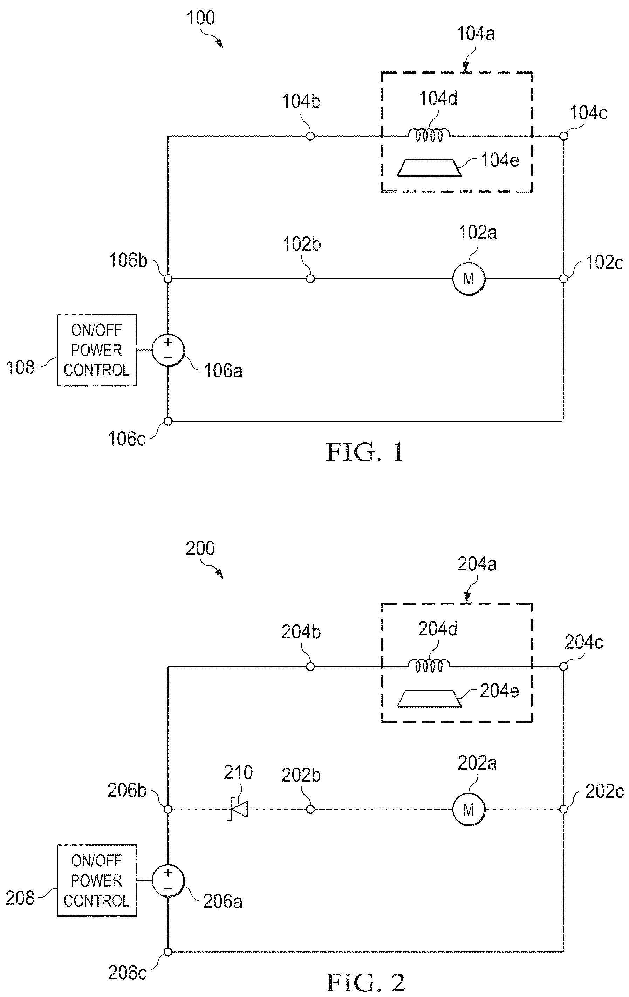

FIGURES 1 through 7, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As state above, in many applications, a direct current (DC) motor includes or is used in conjunction with a brake mechanism, which holds a load in a fixed position when no power is applied. For example, an electric actuator may include a DC motor with an integrated brake mechanism, and the DC motor may include a solenoid which acts as an electromagnet to either engage or disengage a brake from the motor.

FIGURE 1 illustrates a schematic view of an example system 100 including a DC motor and a brake mechanism in accordance with this disclosure. In the example of FIGURE 1, system 100 includes a DC motor 102a. Motor 102a includes a positive terminal 102b and a negative terminal 102c. System 100 also includes a brake mechanism 104a. Brake mechanism 104a includes a positive terminal 104b and a negative terminal 104c. In the embodiment illustrated in FIGURE 1, brake mechanism 104a also includes a solenoid 104d, and a brake 104e, though brake mechanism 104a may be of a different design. System 100 also includes a controllable voltage source 106a controllable by an on/off power control 108. Voltage source 106a includes a positive terminal 106b and a negative terminal 106c. In system 100, positive terminals 102b, 104b, and 106b are electrically coupled with each other. Similarly, negative terminals 102c, 104c, and 106c are electrically coupled with each other. When power control 108 is off, no voltage from voltage source 106a is applied across the positive terminals 102b, 104b, and 106b, and negative terminals 102c, 104c, and 106c. In this state, motor 102a does not run, and brake 104e engages with motor 102a to fix the position of motor 102a. When power control 108 is on, voltage from voltage source 106a is applied across the positive terminals 102b, 104b, and 106b, and negative terminals 102c, 104c, and 106c. In this state, solenoid 104d releases brake 104e from motor 102a, and motor 102a runs.

Although FIGURE 1 illustrates one example of a system 100 including a DC motor and a brake mechanism, various changes may be made to FIGURE 1. For example, while FIGURE 1 shows that motor 102a and brake mechanism 104a are separate devices, brake mechanism 104a may be integral to motor 102a. Additionally, some or all of the components of system 100 may be subcomponents of a different system or device. For example, motor 102a and brake mechanism 104a may be components of an electric actuator. Additionally, some or all of the components of system 100 may be subcomponents of a different system or device. For example, motor 102a and brake mechanism 104a may be components of an electric actuator.

A problem with the design of system 100 is that at the initial turn on time, the voltage is very low it takes time for solenoid 106d to produce enough electromagnetic force to release brake 104e. At the same time, motor 102a is being powered, but locked by brake 104e until solenoid 104d releases it. In another scenario, voltage source 106a may deliver insufficient voltage for solenoid 104d to release brake 104e. These situations generate heat, reducing the life of system 100, and in some circumstances causing motor 102a to fail within minutes. The present disclosure provides alternative designs to system 100, in which a voltage blocking mechanism prevents the DC motor from running until release of the brake.

FIGURE 2 illustrates a schematic view of another example system 200 including a DC motor and a brake mechanism in accordance with this disclosure. In the example of FIGURE 2, system 200 includes a DC motor 202a. Motor 202a includes a positive terminal 202b and a negative terminal 202c. System 200 also includes a brake mechanism 204a. Brake mechanism 204a includes a positive terminal 204b and a negative terminal 204c. In the embodiment illustrated in FIGURE 2, brake mechanism 204a also includes a solenoid 204d, and a brake 204e, though brake mechanism 204a may be of a different design. System 200 also includes a controllable voltage source 206a controllable by an on/off power control 208. Voltage source 206a includes a positive terminal 206b and a negative terminal 206c. System 200 additionally includes a Zener diode 210. In system 200, positive terminal 202b is electrically coupled with the anode of Zener diode 210. The cathode of Zener diode 210, and positive terminals 204b, and 206b are electrically coupled with each other. Similarly, negative terminals 202c, 204c, and 206c are electrically coupled with each other. When power control 208 is off, no voltage from voltage source 206a is applied across the cathode of Zener diode 210 and positive terminals 204b, and 206b, and negative terminals 202c, 204c, and 206c. In this state, motor 202a does not run, and brake 204e engages with motor 202a to fix the position of motor 202a. When power control 208 is on, voltage from voltage source 206a is applied across the cathode of Zener diode 210 and positive terminals 204b, and 206b, and negative terminals 202c, 204c, and 206c. In this state, solenoid 204d releases brake 204e from motor 202a, and motor 202a runs.

In the embodiment illustrated in FIGURE 2, the inclusion of Zener diode 210 allows solenoid 204d to charge sufficiently at power on to release brake 204e before motor 202a runs. Once the voltage across motor 202a is sufficiently high and reaches the diode breakdown voltage of Zener diode 210, Zener diode 210 passes current and allows motor 202a to run freely without resistance from brake 204e.

Although FIGURE 2 illustrates one example of a system 200 including a DC motor and a brake mechanism, various changes may be made to FIGURE 2. For example, while FIGURE 2 shows that motor 202a and brake mechanism 204a are separate devices, brake mechanism 204a may be integral to motor 202a. Additionally, some or all of the components of system 200 may be subcomponents of a different system or device. For example, motor 202a and brake mechanism 204a may be components of an electric actuator.

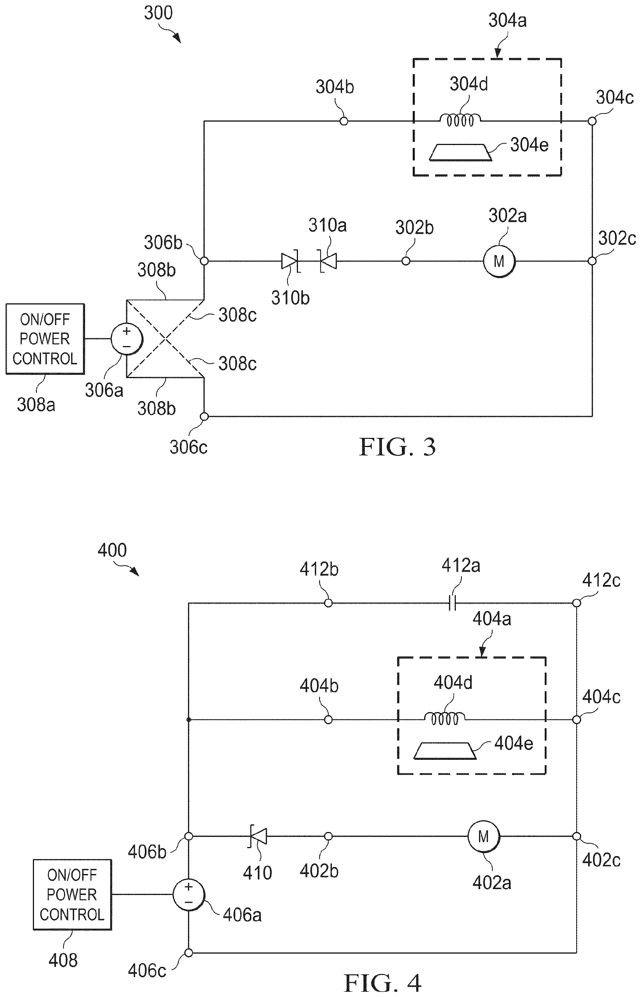

FIGURE 3 illustrates a schematic view of another example system 300 including a DC motor and a brake mechanism in accordance with this disclosure. In the example of FIGURE 3, system 300 includes a DC motor 302a. Motor 302a includes a first terminal 302b and a second terminal 302c. System 300 also includes a brake mechanism 304a. Brake mechanism 304a includes a first terminal 304b and a second terminal 304c. In the embodiment illustrated in FIGURE 3, brake mechanism 304a also includes a solenoid 304d, and a brake 304e, though brake mechanism 304a may be of a different design. System 300 also includes a controllable voltage source 306a controllable by an on/off power control 308a. on/off power control 308a is configured to change the polarity of voltage source 306a within system 300 to control motor 302a in a forward or reverse direction. For example, to control motor 302a in the forward direction, power control 308a switches voltage source 306a into electrical path 308b (e.g., via a relay or other switching device). Similarly, to control motor 302a in the reverse direction, power control 308a switches voltage source 306a into electrical path 308c (e.g., via a relay or other switching device). Voltage source 306a includes a first terminal 306b and a second terminal 306c. System 300 additionally includes a Zener diode 310a, and another Zender diode 310b. In system 300, first terminal 302b is electrically coupled with the cathode of Zener diode 310a. The anodes of Zener diode 310a and 310b are connected, and the cathode of Zener diode 310b and first terminals 304b, and 306b are electrically coupled with each other. Similarly, second terminals 302c, 304c, and 306c are electrically coupled with each other. When power control 308 is off, no voltage from voltage source 306a is applied across Zener diodes 310a and 310b and first terminals 304b, and 306b, and second terminals 302c, 304c, and 306c. In this state, motor 302a does not run, and brake 304e engages with motor 302a to fix the position of motor 302a. When power control 308 is on, voltage from voltage source 306a is applied across Zener diodes 310a and 310b and first terminals 304b, and 306b, and second terminals 302c, 304c, and 306c. In this state, solenoid 304d releases brake 304e from motor 302a, and motor 302a runs in the forward or reverse direction according to the configuration of voltage source 306a by power control 308.

In the embodiment illustrated in FIGURE 3, the inclusion of Zener diodes 310a and 310b allows solenoid 304d to charge sufficiently at power on to release brake 304e before motor 302a runs in either the forward or reverse direction. Once the voltage across motor 302a is sufficiently high and reaches the diode breakdown voltage of Zener diode 310a or 310b, depending on the direction of the polarity of the DC voltage from voltage source 306a, Zener diodes 310a and 310b pass current and allow motor 302a to run freely without resistance from brake 304e.

Although FIGURE 3 illustrates one example of a system 300 including a DC motor and a brake mechanism, various changes may be made to FIGURE 3. For example, while FIGURE 3 shows that motor 302a and brake mechanism 304a are separate devices, brake mechanism 304a may be integral to motor 302a. Additionally, some or all of the components of system 300 may be subcomponents of a different system or device. For example, motor 302a and brake mechanism 304a may be components of an electric actuator.

FIGURE 4 illustrates a schematic view of another example system 400 including a DC motor and a brake mechanism. In the example of FIGURE 4, system 400 includes a DC motor 402a. Motor 402a includes a positive terminal 402b and a negative terminal 402c. System 400 also includes a brake mechanism 404a. Brake mechanism 404a includes a positive terminal 404b and a negative terminal 404c. In the embodiment illustrated in FIGURE 4, brake mechanism 404a also includes a solenoid 404d, and a brake 404e, though brake mechanism 404a may be of a different design. System 400 also includes a controllable voltage source 406a controllable by an on/off power control 408. Voltage source 406a includes a positive terminal 406b and a negative terminal 406c. System 400 additionally includes a Zener diode 410, and a capacitor 412a. Capacitor 412a includes a positive terminal 421b, and a negative terminal 412c. In system 400, positive terminal 402b is electrically coupled with the anode of Zener diode 410. The cathode of Zener diode 410, and positive terminals 404b, 406b and 412b are electrically coupled with each other. Similarly, negative terminals 402c, 404c, 406c, and 412c are electrically coupled with each other. When power control 408 is off, no voltage from voltage source 406a is applied across the cathode of Zener diode 410 and positive terminals 404b, 406b, and 412b, and negative terminals 402c, 404c, 406c and 412c. In this state, motor 402a does not run, and brake 404e engages with motor 402a to fix the position of motor 402a. When power control 408 is on, voltage from voltage source 406a is applied across the cathode of Zener diode 410 and positive terminals 404b, 406b, and 4126b, and negative terminals 402c, 404c, 406c and 412c. In this state, solenoid 404d releases brake 404e from motor 402a, and motor 402a runs.

In the embodiment illustrated in FIGURE 4, the inclusion of Zener diode 410 allows solenoid 404d to charge sufficiently at power on to release brake 404e before motor 402a runs. Once the voltage across motor 402a is sufficiently high and reaches the diode breakdown voltage of Zener diode 410, Zener diode 410 passes current and allows motor 402a to run freely without resistance from brake 404e. The inclusion of capacitor 412a dampens power fluctuations when the voltage reaches the diode breakdown voltage of Zener diode 410.

Although FIGURE 4 illustrates one example of a system 400 including a DC motor and a brake mechanism, various changes may be made to FIGURE 4. For example, while FIGURE 4 shows that motor 402a and brake mechanism 404a are separate devices, brake mechanism 404a may be integral to motor 402a. Additionally, some or all of the components of system 400 may be subcomponents of a different system or device. For example, motor 402a and brake mechanism 404a may be components of an electric actuator.

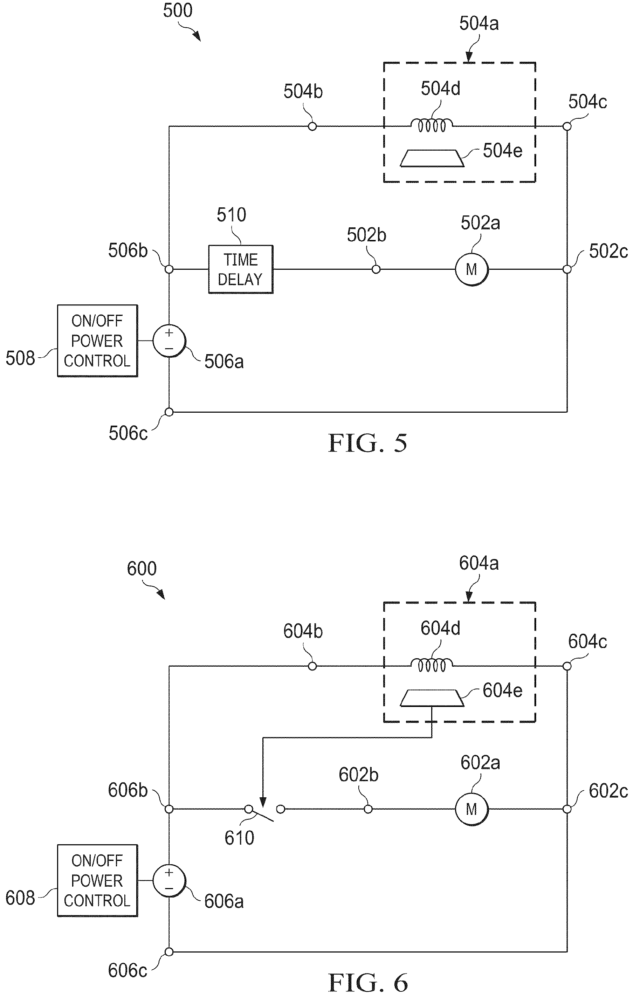

FIGURE 5 illustrates a schematic view of another example system 500 including a DC motor and a brake mechanism in accordance with this disclosure. In the example of FIGURE 5, system 500 includes a DC motor 502a. Motor 502a includes a positive terminal 502b and a negative terminal 502c. System 500 also includes a brake mechanism 504a. Brake mechanism 504a includes a positive terminal 504b and a negative terminal 504c. In the embodiment illustrated in FIGURE 5, brake mechanism 504a also includes a solenoid 504d, and a brake 504e, though brake mechanism 504a may be of a different design. System 500 also includes a controllable voltage source 506a controllable by an on/off power control 508. Voltage source 506a includes a positive terminal 506b and a negative terminal 506c. System 500 additionally includes a time delay device 510. In system 500, positive terminal 502b is electrically coupled with the output of time delay device 510. The input of time delay device 510, and positive terminals 504b, and 506b are electrically coupled with each other. Similarly, negative terminals 502c, 504c, and 506c are electrically coupled with each other. When power control 508 is off, no voltage from voltage source 506a is applied across the input of time delay device 510 and positive terminals 504b, and 506b, and negative terminals 502c, 504c, and 506c. In this state, motor 502a does not run, and brake 504e engages with motor 502a to fix the position of motor 502a. When power control 508 is on, voltage from voltage source 506a is applied across the input of time delay device 510 and positive terminals 504b, and 506b, and negative terminals 502c, 504c, and 506c. In this state, solenoid 504d releases brake 504e from motor 502a, and motor 502a runs.

In the embodiment illustrated in FIGURE 5, the inclusion of time delay device 510 allows solenoid 504d to charge sufficiently at power on to release brake 504e before motor 502a runs. For example, time delay device 510 may be a time delay switch, microcontroller, etc. configured to delay transfer of power to motor 502a at power on until a brake disengagement time. After the delay time, time delay device 510 permits power to flow to motor 502a to run freely without resistance from brake 504e.

Although FIGURE 5 illustrates one example of a system 500 including a DC motor and a brake mechanism, various changes may be made to FIGURE 5. For example, while FIGURE 5 shows that motor 502a and brake mechanism 504a are separate devices, brake mechanism 504a may be integral to motor 502a. Additionally, some or all of the components of system 500 may be subcomponents of a different system or device. For example, motor 502a and brake mechanism 504a may be components of an electric actuator.

FIGURE 6 illustrates a schematic view of another example system 600 including a DC motor and a brake mechanism in accordance with this disclosure. In the example of FIGURE 6, system 600 includes a DC motor 602a. Motor 602a includes a positive terminal 602b and a negative terminal 602c. System 600 also includes a brake mechanism 604a. Brake mechanism 604a includes a positive terminal 604b and a negative terminal 604c. In the embodiment illustrated in FIGURE 6, brake mechanism 604a also includes a solenoid 604d, and a brake 604e, though brake mechanism 604a may be of a different design. System 600 also includes a controllable voltage source 606a controllable by an on/off power control 608. Voltage source 606a includes a positive terminal 606b and a negative terminal 606c. System 600 additionally includes a switching device 610. In system 600, positive terminal 602b is electrically coupled with the output of switching device 610. The input of switching device 610, and positive terminals 604b, and 606b are electrically coupled with each other. Similarly, negative terminals 602c, 604c, and 606c are electrically coupled with each other. Switching device 610 is configured to open or close based on the position of solenoid 604d and/or brake 604e. When power control 608 is off, no voltage from voltage source 606a is applied across the input of switching device 610 and positive terminals 604b, and 606b, and negative terminals 602c, 604c, and 606c. In this state, motor 602a does not run, and brake 604e engages with motor 602a to fix the position of motor 602a, and switching device 610 is open. When power control 608 is on, voltage from voltage source 606a is applied across the input of switching device 610 and positive terminals 604b, and 606b, and negative terminals 602c,604c, and 606c. In this state, solenoid 604d releases brake 604e from motor 602a, closes switching device 610, and motor 602a runs.

In the embodiment illustrated in FIGURE 6, the inclusion of switching device 610 prevents transfer of power to motor 602a any time that brake 604e is engaged. This has the advantage over other embodiments that the motor will not be powered if the solenoid is failed open and the brake cannot release. While FIGURE 6 illustrates switching device 610 as a switch mechanically coupled to brake 604e, switching device 610 may be of any design that opens and closes based on the position of solenoid 604d and/or brake 604e. For example, switching device 610 could be an electromechanical relay triggered to close when solenoid 604d and/or brake 604e hit a limit switch after disengagement of brake 604e.

Although FIGURE 6 illustrates one example of a system 600 including a DC motor and a brake mechanism, various changes may be made to FIGURE 6. For example, while FIGURE 6 shows that motor 602a and brake mechanism 604a are separate devices, brake mechanism 604a may be integral to motor 602a. Additionally, some or all of the components of system 600 may be subcomponents of a different system or device. For example, motor 602a and brake mechanism 604a may be components of an electric actuator.

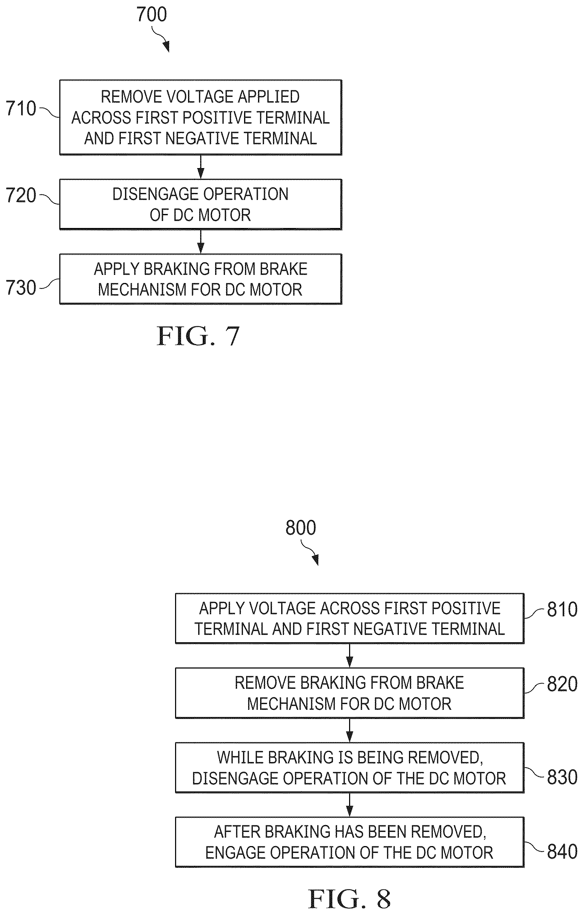

FIGURE 7 illustrates an example method 700 for improved power distribution for DC brushed motors with integrated brakes in accordance with this disclosure. For example, method 600 may be performed by any of systems 200-600 of FIGURES 2-6.

Method 700 begins at step 710. At step 710 a voltage applied across a first positive terminal and a second positive terminal of an apparatus including a DC motor is removed. At step 620, operation of the DC motor is disengaged.

At step 730, braking from a brake mechanism for the DC motor is applied. In some embodiments, the brake mechanism includes a solenoid. In some embodiments, the solenoid is configured to apply the braking to the DC motor when no voltage is present across the first positive terminal and the first negative terminal.

Although FIGURE 7 illustrates one example of a method 700 for improved power distribution for DC brushed motors with integrated brakes, various changes may be made to FIGURE 7. For example, while shown as a series of steps, various steps in FIGURE 7 could overlap, occur in parallel, occur in a different order, occur any number of times, be omitted, or be replaced by other steps.

FIGURE 8 illustrates another example method 800 for improved power distribution for DC brushed motors with integrated brakes in accordance with this disclosure. For example, method 700 may be performed by any of systems 200-500 of FIGURES 2-5.

Method 800 begins at step 810. At step 810 a voltage is applied across a first positive terminal and a second positive terminal of an apparatus including a DC motor. At step 820, braking from a brake mechanism for the DC motor is removed. In some embodiments, the brake mechanism includes a solenoid. In some embodiments, the solenoid is configured to remove the braking from the DC motor when the voltage is applied across the first positive terminal and the first negative terminal.

At step 830, while the braking is being removed, operation of the DC motor is disengaged. In some embodiments, disengaging operation of the DC motor while the braking is being removed includes blocking a voltage from a second positive terminal of the DC motor via a Zener diode. In some embodiments, disengaging operation of the DC motor while the braking is being removed includes delaying engaging operation of the DC motor for a first time greater than a second time for the brake mechanism to remove the braking from the DC motor when the voltage is applied across the first positive terminal and the first negative terminal. In some embodiments, when applying the braking to the DC motor, the solenoid opens a switching device coupled to a power terminal of the DC motor to disengage operation of the DC motor. In some embodiments, disengaging operation of the DC motor while the braking is being removed includes maintaining an open state of a switching device coupled to a power terminal of the DC motor.

At step 840, after the braking has been removed, operation of the DC motor is engaged. In some embodiments, engaging operation of the DC motor includes engaging operation of the DC motor after the first time has elapsed. In some embodiments when the braking to the DC motor is removed, the solenoid closes the switching device to engage operation of the DC motor. In some embodiments, engaging operation of the DC motor comprises closing the switching device.

Although FIGURE 8 illustrates one example of a method 800 for improved power distribution for DC brushed motors with integrated brakes, various changes may be made to FIGURE 8. For example, while shown as a series of steps, various steps in FIGURE 8 could overlap, occur in parallel, occur in a different order, occur any number of times, be omitted, or be replaced by other steps.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An apparatus comprising:
a first terminal;
a second terminal;
a direct current (DC) motor configured to operate when a voltage is applied across the first terminal and the second terminal;
a brake mechanism configured to apply braking to the DC motor when no voltage is present across the first terminal and the second terminal, and remove the braking from the DC motor when the voltage is applied across the first terminal and the second terminal; and
a voltage blocking mechanism configured to prevent the DC motor from operating when the voltage is applied across the first terminal and the second terminal until the braking from the brake mechanism is removed from the DC motor.

2. The apparatus of claim 1 wherein:
the voltage blocking mechanism is a Zener diode including an anode and a cathode;
the DC motor includes a third terminal and a fourth terminal;
the brake mechanism includes a fifth terminal and a sixth terminal;
the first terminal, the fifth terminal, and the cathode are electrically coupled;
the third terminal and the anode are electrically coupled; and
the second terminal, the fourth terminal, and the sixth terminal are electrically coupled.

3. The apparatus of claim 2, further comprising a capacitor including a seventh terminal and an eighth terminal,
wherein the seventh terminal is electrically coupled to the first terminal, and the eighth terminal is electrically coupled to the second terminal.

4. The apparatus of claim 1, wherein the voltage blocking mechanism is a time delay device configured to:
prevent the DC motor from operating when the voltage is applied across the first terminal and the second terminal for a first time greater than a second time for the brake mechanism to remove the braking from the DC motor when the voltage is applied across the first terminal and the second terminal; and
after the first time is elapsed, allow the DC motor to operate.

5. The apparatus of claim 1, wherein:
the brake mechanism includes a solenoid with a third terminal and a fourth terminal;
the first terminal and the third terminal are electrically coupled;
the second terminal and the fourth terminal are electrically coupled; and
the solenoid is configured to apply the braking to the DC motor when no voltage is present across the first terminal and the second terminal, and remove the braking from the DC motor when the voltage is applied across the first terminal and the second terminal.

6. The apparatus of claim 5, wherein the voltage blocking mechanism is a switching device configured to:
disengage the DC motor from a power source when the solenoid is applying the braking to the DC motor; and
engage the DC motor with the power source when the solenoid has removed the braking from the DC motor.

7. The apparatus of claim 1, wherein the voltage blocking mechanism is a switching device configured to:
disengage the DC motor from a power source when the brake mechanism is applying braking to the DC motor; and
engage the DC motor with the power source when the brake mechanism has removed braking from the DC motor.

8. The apparatus of any preceding claim, wherein the apparatus is an electric actuator.

9. A method comprising:
while no voltage is applied across a first terminal and a second terminal of an apparatus including a direct current (DC) motor:
disengaging operation of the DC motor; and
applying braking from a brake mechanism for the DC motor; and
while a voltage is applied across the first terminal and the second terminal of the apparatus:
removing braking from the brake mechanism for the DC motor;
while the braking is being removed, disengaging operation of the DC motor; and
after the braking has been removed, engaging operation of the DC motor.

10. The method of Claim 9, wherein disengaging operation of the DC motor while the braking is being removed comprises blocking a voltage from a third terminal of the DC motor via a Zener diode.

11. The method of Claim 9, wherein:
disengaging operation of the DC motor while the braking is being removed comprises delaying engaging operation of the DC motor for a first time greater than a second time for the brake mechanism to remove the braking from the DC motor when the voltage is applied across the first terminal and the second terminal; and
engaging operation of the DC motor comprises engaging operation of the DC motor after the first time has elapsed.

12. The method of Claim 9, wherein:
the brake mechanism includes a solenoid with a third terminal and a fourth terminal;
the first terminal and the third terminal are electrically coupled;
the second terminal and the fourth terminal are electrically coupled; and
the solenoid is configured to apply the braking to the DC motor when no voltage is present across the first terminal and the second terminal, and remove the braking from the DC motor when the voltage is applied across the first terminal and the second terminal.

13. The method of Claim 12, wherein:
when applying the braking to the DC motor the solenoid opens a switching device coupled to a power terminal of the DC motor to disengage operation of the DC motor; and
when the braking to the DC motor is removed, the solenoid closes the switching device to engage operation of the DC motor.

14. The method of Claim 12, wherein:
disengaging operation of the DC motor while the braking is being removed comprises maintaining an open state of a switching device coupled to a power terminal of the DC motor; and
engaging operation of the DC motor comprises closing the switching device.

15. An electric actuator comprising:
a first terminal;
a second terminal;
a direct current (DC) motor configured to operate when a voltage is applied across the first terminal and the second terminal;
a brake mechanism configured to apply braking to the DC motor when no voltage is present across the first terminal and the second terminal, and remove the braking from the DC motor when the voltage is applied across the first terminal and the second terminal; and
a voltage blocking mechanism configured to prevent the DC motor from operating when the voltage is applied across the first terminal and the second terminal until the braking from the brake mechanism is removed from the DC motor.
